# NEUE EUROPÄISCHE PATENTSCHRIFT

(11) **EP 0 467 182 B2**
(45) Veröffentlichungstag und Bekanntmachung des Hinweises auf die Entscheidung über den Einspruch: **29.04.1998**
(45) Hinweis auf die Patenterteilung: 07.09.1994
(21) Anmeldenummer: 91111292.8
(22) Anmeldetag: 06.07.1991
(51) Int. Cl.: B62D 29/00, B62D 33/02, B62D 21/20, B62D 63/08

(54) **Pritschenaufbau**
Flatbed body
Carrosserie à plate-forme

(30) Priorität: 18.07.1990 DE 4022854
(43) Veröffentlichungstag der Anmeldung: 22.01.1992
(73) Patentinhaber: Koch, Christian, D-21423 Winsen (DE)
(72) Erfinder: Koch, Christian, D-21423 Winsen (DE)
(74) Vertreter: Vonnemann, Gerhard, Dr.-Ing.

(56) Entgegenhaltungen:
- EP-A- 0 235 330
- EP-A- 0 297 073
- DE-U- 8 229 145
- DE-U- 8 336 029
- SE-B- 458 267
- Constructie en berekening van verbrandingsmotoren, 1960, S. 194-197;
- Technisch Vademecum, 1963, S. 1596 u. 1597.

## Beschreibung

Die Erfindung betrifft einen Pritschenaufbau, vorzugsweise als Aufbau für PKW-Anhänger aus stranggepreßten Profilen, vorzugsweise Aluminiumprofilen, bestehend aus mindestens zwei seitlich angeordneten tragenden Längs- und vorn und hinten angeordneten Querholmen, die zusammen einen Rahmen bilden.

Derartige Pritschenaufbauten sind beispielsweise aus SE-B-0 458 267 und EP-A1-0 297 073 bekannt. Stranggepreßte Profile werden dort zum Zusammenbau von PKW-Pritschen mittels Schrauben verwendet. Die Schrift EP-A1-0 297 073 befaßt sich mit einer speziellen Ausgestaltung des Eckpfostens, während die SE-B-0 458 267 einen Montagesatz für PKW-Anhänger beschreibt.

Aus DE-U-83 36 029 und DE-U-82 29 145 sind Kraftfahrzeug-Anhänger bekannt aus stranggepreßten Leichtmetallhohlprofilen, wobei die Bordwände aus einstückigen Bordwandprofilen bestehen und Winkelstege zum Auflegen des Kastenbodens sowie zur seitlichen Verstärkung aufweisen.

Problematisch ist bei dem bekannten geschraubten Pritschenaufbau die Einzelteile so fest miteinander zu verbinden, daß sie ein den Anforderungen entsprechenden steifen Pritschenaufbau ergeben, der sich auch bei starken Vibrationen unter hohen Lasten nicht in seine Einzelteile zerlegt. Dabei stellt speziell die Heckpartie ein besonderes Problem dar, da dort die Bordwand zum Zwecke des Beladens U-förmig geöffnet ist.

Die bekannten Pritschenaufbauten werden folglich im Heckbereich stets verschweißt.

Da die Schweißungen statisch und dynamisch hoch belastet sind, müssen sie von Fachkräften ausgeführt werden, die die entsprechenden Schweißzeugnisse besitzen. Trotzdem bilden gerade die Schweißungen bevorzugte Angriffspunkte für Korrosion. Außerdem können durch die Schweißungen infolge unterschiedlicher Wärmeschrumpfung Spannungen in den Rahmen des Pritschenaufbaus eingeleitet werden, die zu Verformungen der Pritsche führen.

Wärmebehandlungen setzen dagegen Eigenspannungen des stranggepreßten Hohlprofils frei, die ebenfalls Ursache ähnlicher Verformungen sein können. Die Beseitigung derartiger Verformungen führt zu erheblichem Aufwand und Störungen im Fertigungsablauf. Schließlich härten Schweißungen auch erst nach einer gewissen Zeit vollkommen aus, so daß die zulässige Belastung des Pritschenaufbaus erst nach einiger Zeit erreicht wird. Es besteht deshalb seit langem das Bedürfnis nach einem Pritschenaufbau, der es ermöglicht, in der Massenfertigung ohne Schweißen auszukommen.

Je nach gewünschter Tragfähigkeit müssen unterschiedliche Profile für die Schweißkonstruktion des Rahmens verwendet werden. Der geschweißte Rahmen ist sperrig und beansprucht in der Fertigung viel Platz für seine Zwischenlagerung zwischen den einzelnen Fertigungsstufen. Das darin gebundene Kapital in Form von Fertigungskosten beeinträchtigt die Liquidität des Fertigungsunternehmens. Die Durchlaufzeit eines Auftrages ist nachteilig lang.

Aufgabe der Erfindung ist es, einen Pritschenaufbau anzugeben, der eine möglichst geringe Montagezeit aufweist.

Die Aufgabe der Erfindung wird dadurch gelöst, daß der Aufbau mindestens ein parallel zum Querholm angeordnetes und mit diesem mittels förmschlüssig ineinandergreifender Profilteile verbundenes Verstärkungsprofil aufweist und/oder das Verstärkungsprofil ein als Auflager für Unterzüge ausgebildetes Formelement, vorzugsweise zwei parallel Stege aufweist, wobei das Verstärkungsprofil vorzugsweise parallele, in vertikaler Richtung angeordnete Stege aufweist, deren Abstand der Schlüsselweite eines Schraubenkopfes entspricht. Die Tragfähigkeit eines zusammengesetzten Rahmens kann hierdurch noch weiter erhöht werden. Die Unterzüge tragen eine von einer Bodenplatte auf die Unterzüge eingeleitetes Last zunächst in das Verstärkungsprofil ein und anschließend auf den Querholm ab. Durch Wahl unterschiedlicher Anzahlen von Unterzügen kann die Tragfähigkeit des Pritschenaufbaus individuell an den jeweiligen Kundenwunsch angepaßt werden. Der Kopf der Schraube, mit der Unterzüge im Verstärkungsprofil befestigt werden, wird hierdurch gegen Verdrehen bei der Montage gesichert.

Die Aufgabe der Erfindung wird auch dadurch gelöst, daß er ein das Profil eines Querholmes einsteckbares U-förmiges Profil aufweist, dessen lichte Weite vorzugsweise der Schlüsselweite eines Schraubenkopfes entspricht und das U-förmige Profil vorzugsweise Schenkel aufweist, deren Abstand sich zu den freien Enden hin verringert. Hierdurch wird eine noch schnellere Montage und Befestigung des Pritschenaufbaus am Fahrgestell erreicht, da die einzuführenden Befestigungsschrauben mit ihren Köpfen während des Einführens sicher zwischen den freien Enden des U-förmigen Profils geklemmt werden.

Die Aufgabe der Erfindung wird bei einem Pritschenaufbau, aus stranggepreßten Profilen, bestehend aus mindestens zwei seitlich angeordneten tragenden Längs- vorn und hinten angeordneten Querholmen, die zusammen einen Rahmen bilden, wobei die Enden der Längsholme und mindestens eines Querholmes mittels mindestens eines, sich über die gesamte Breite des Rahmen erstreckenden, Zugankers verspannt wird, schließlich auch dadurch gelöst, daß das Profil des hinteren Querholms mindestens ein geschlossenes Hohlprofilteil für den Zuganker aufweist und das Profil des hinteren Querholms Formelemente zum formschlüssigen Einstecken eines Scharnierprofils aufweist.

In alternativer Ausführung ist vorgesehen, daß der Pritschenaufbau ein Scharnierprofil aufweist, wobei im Scharnierprofil verschraubte Augenschrauben in entsprechend angeordnete Ausklinkungen eines rohrförmigen Heckprofilteils eingreifend angeordnet sind und mittels eines durch den rohrförmigen Heckprofilteil geführten Zugankers schwenkbar fixiert sind.

In Ausgestaltung der Erfindung ist für die beiden ersten Lösungen zusätzlich vorgesehen, daß die hinteren Enden der Längsholme und mindestens eines Querholms mittels mindestens eines, sich über die gesamte Breite des Rahmens erstreckenden, Zugankers verspannt werden.

Es ergibt sich dadurch eine kraft- und formschlüssige Verbindung aller Teile im Heckbereich. Auch bei den auftretenden hohen Belastungen des Heckbereichs bleiben die einzelnen Teile überraschenderweise form- und kraftschlüssig zusammengefügt. Es kommt nicht, wie möglicherweise erwartet, zu einer Fugenbildung, die ihrerseits wieder zu unerwünschten Prall- und Schwingungseffekten bei dynamischer Beanspruchung führt. Dieses positive Verhalten der neuartige Fügeverbindung im Heckbereich des Pritschenaufbaus wird dadurch erklärt, daß durch den Zuganker, der sich über die gesamte Breite des Rahmens erstreckt, sich ein Dehnschraubeneffekt ergibt, der die einzelnen Teile so weit vorspannt, daß die aufgebrachte elastische Verformung auch bei höheren Belastungen und starken Schwingungen einer Fugenbildung zuverlässig entgegenwirkt.

Durch den Verzicht auf Schweißverbindungen entfällt die Notwendigkeit, vorgeschweißte tragende Rahmen in der Fertigung zwischenzulagern. Die zur Herstellung der Rahmen vorbereiteten Profilstäbe können direkt am Endmontageplatz gelagert werden. In der Endmontage wird als Fügeverfahren nur ein einziges Verfahren angewendet, nämlich Schrauben oder Nieten. Die Fertigungstiefe des Endprodukts verringert sich dadurch vorteilhaft. Da das Endprodukt nur an einem einzigen Montageplatz aus den fertig abgelängten Profilteilen, nämlich stranggepreßten Aluminiumprofilen,zusammengesetzt wird, verringert sich die Durchlaufzeit. Entsprechend verändert sich die Kaptialbindung.

Besonders vorteilhaft ist es, wenn der Zuganker aus einem Werkstoff besteht, dessen Elastizitätsmodul höher als der des Aluminiums ist.

In weiterer Ausgestaltung der Erfindung ist vorgesehen, daß das Profil des Querholms und das Verstärkungsprofil angeformte horizontale, sich gegeneinander in vertikaler Richtung abstützende Profilflächen aufweist und/oder die Profile Rillen als eingeformte Anrißlinien aufweisen. Diese Maßnahme dient der Erhöhung der Tragfähigkeit, da beide verbundenen Profilteile statisch die Last abtragen. Ein Ausreißen der Schraubenköpfe wird vermieden. Die Rillen verringern die Montagezeiten, weil sie das Einbringen von Bohrungen in die Profile an den Befestigungsstellen erleichtern.

In weiterer Ausgestaltung der Erfindung ist vorgesehen, daß das Profil des hinteren Querholms mindestens ein geschlossenes Hohlprofilteil aufweist für Zuganker. Die geschlossenen Hohlprofilteile geben dem hinteren Querholm eine größere Stabilität und schützen auch die Zuganker vor Korrosionen und Beschädigungen.

In weiterer Ausgestaltung der Erfindung ist vorgesehen, daß das Heckprofil Formelemente zum formschlüssigen Einstecken eines Scharnierprofils aufweist. Das Scharnier läßt sich hierdurch besonders einfach durchAblängen von einer Profilstange und Einschieben in das Heckprofil herstellen und befestigen.

In weiterer Ausgestaltung der Erfindung ist vorgesehen, daß der Aufbau eine Auffahrplatte mit einem Auffahrkeilprooil und einem Scharnierprofil aufweist, wobei das Scharnierprofil vorzugsweise parallele Flächen aufweist, deren Abstand der Schlüsselweite eine Augenschraubenmutter entspricht. Dadurch läßt sich der Pritschenaufbau so ausgestalten, daß auch schwere Lasten über eine von der Auffahrplafte gebildete schiefe Ebene auf die Ladefläche bewegt werden können. Hierdurch lassen sich zur Montage des Scharniers standard-mäßige Augenschrauben verwenden, die sich mittels in das Scharnierprofil eingeschobener von Muttern einschrauben lassen, wobei das Sichern der Mutter gegen Verdrehen während der Montage vorteilhaft durch das entsprechend geformte Scharnierprofil erfolgt.

In weiterer Ausgestaltung der Erfindung ist vorgesehen, daß er ein Scharnierprofil aufweist, wobei im Scharnierprofil verschraubte Ringschrauben in entsprechend angeordnete Ausklinkungen eines rohrförmigen Heckprofilteils eingreifend angeordnet sind und mittels eines durch den rohrförmigen Heckprofilteils geführten Zuganker schwenkbar fixient sind. Somit wird vorteilhaft der Zuganker auch als Achse für das Scharnier benutzt. Je nach Abstand der Augenschrauben können unterschiedliche Tragfähigkeiten verwirklicht werden.

In weiterer Ausgestaltung der Erfindung ist vorgesehen, daß der Aufbau ein Planengestell aufweist mit Eckpfosten und diese oben verbindenden Oberkantenprofilen, wobei diese an ihrer Oberseite U-förmige horizontal angeordnete Schenkel aufweisen, zwischen denen Enden eine Spriegelprofils gehaltert sind, wobei das Spriegelprofil vorzugsweise als rechteckiges Hohlprofilteil ausgebildet ist, mit vorzugsweise an zwei benachbarten Seiten angeordneten Formelementen, die sich ergänzend eine formschlüssige Verbindung ermöglichen. Diese Ausbildung des Planenoberkantenprofils verkürzt vorteilhaft die Montage von Spriegelprofilen. Durch einfaches Einstecken eines kürzeren Abschnittes desselben Profils kann der mittelbare Bereich des Planengestells angehoben werden, damit nach Ausbreiten der Plane das Dach eine Neigung zum Ableiten von Wasser erhält.

Weitere Vorteile und erfindungswesentliche Merkmale ergeben sich aus der nachfolgenden Beschreibung einer bevorzugten Ausführungsform der Erfindung unter Bezugnahme auf die beigefügte Zeichnung, in der gleiche Teile mit denselben Bezugsziffern versehen sind. Die Figuren der Zeichnung zeigen im einzelnen:
- Fig. 1: PKW-Anhänger,
- Fig. 2: Planengestell in perspektivischer Ansicht,
- Fig. 3: Schnitt durch ein Bugwandprofil gemäß Schnittlinie III-III aus Figur 1 in vereinzelter Darstellung,
- Fig. 4: Schnitt durch ein Seitenwandprofil gemäß Schnittlinie IV-IV aus Figur 1,
- Fig. 5: Schnitt durch eine Heckwand ohne Heckklappe gemäß Schnittlinle V-V aus Figur 1,
- Fig. 6: Schnitt durch ein Unterzugprofil,
- Fig. 7: Schnitt durch ein Heckpfostenprofil,
- Fig. 8: Schnitt durch ein Eckflanckenprofil,
- Fig. 9: Schnitt durch ein Heckprofil mit Scharnierprofil für eine Auffahrplatte,
- Fig. 10: Schnitt durch ein Relingstüzenprofil,
- Fig. 11: Schnitt durch ein Planengestelleckpfostenprofil,
- Fig. 12: Schnitt durch ein Planengestelloberkantenprofil mit zugehörigem Spriegelprofil.

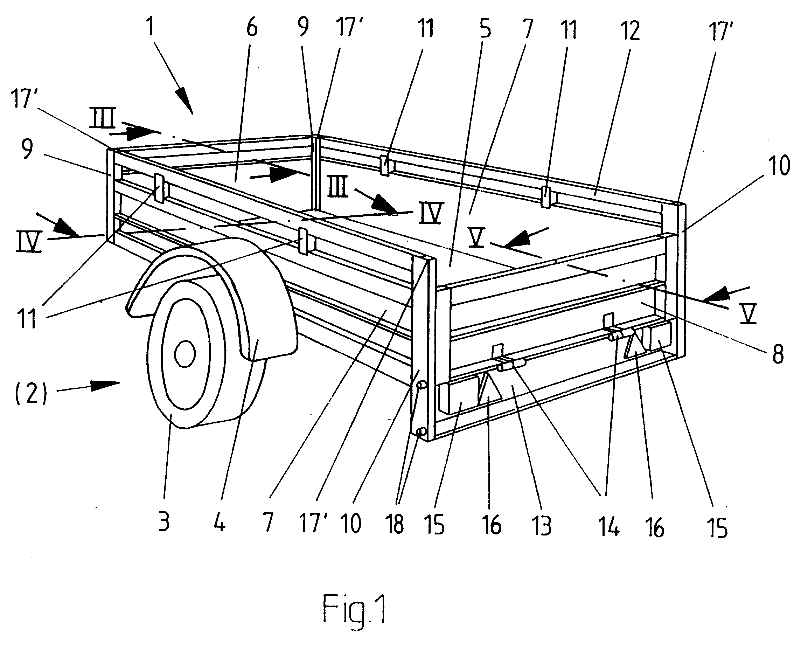

Der in Figur 1 dargestellte PKW-Anhänger zeigt in perspektivischer Ansicht einen Pritschenaufbau 1, der auf einem Fahrgestell 2 montiert ist. Das Fahrgestell 2 besteht im wesentlichen aus einer Deichsel mit Anhängerkupplung und einer Achse mit zwei Rädern, wobei die Deichsel ein "T" bildende mit der Achse test verbunden ist. Von dem Fahrgestell 2 ist in der perspektivischen Ansicht nur das vordere Rad 3 mit Kotflügel 4 sichtbar.

Den Boden der Pritsche bildet eine Platte 5. Diese wird vorn durch die Bugwand 6, seitlich durch die Seitenwände 7 und hinten durch die Heckplatte 8 begrenzt. Mittels vorderer Eckpfosten 9, in die die vorderen Enden der Seitenwände 7 und die Enden der Bugwand 6 eingesteckt sind, wird die Bugwand 6 mit den Seitenwänden 7 verbunden. Das andere Ende der Seitenwände 7 ist in Hecktlankenprofil 10 eingesteckt, die die Seitenwände hinten begrenzen.

Oberhalb der Bug- und Seitenwände 6, 7 ist mittels vier Relingstützen 11, vorderen Eckpfosten 9 sowie Hecktlanken 10 eine U-förmig umlaufende Reling 12 befestigt, die das Sichern von transportierten Lasten erleichtert.

Ein hinterer Querholm 13 verbindet die beiden Heckflankenprofile 10 und die Seitenwände 7 miteinander.

Die Heckklappe 8 ist mittels Scharnieren 14 am hinteren Querholm 13 schwenkbar befestigt. Im Profil des Querholmes 13 sind die seitlichen Heckleuchten 15 und reflektierenden Dreiecke 16 gegen Beschädigungen geschützt befestigt.

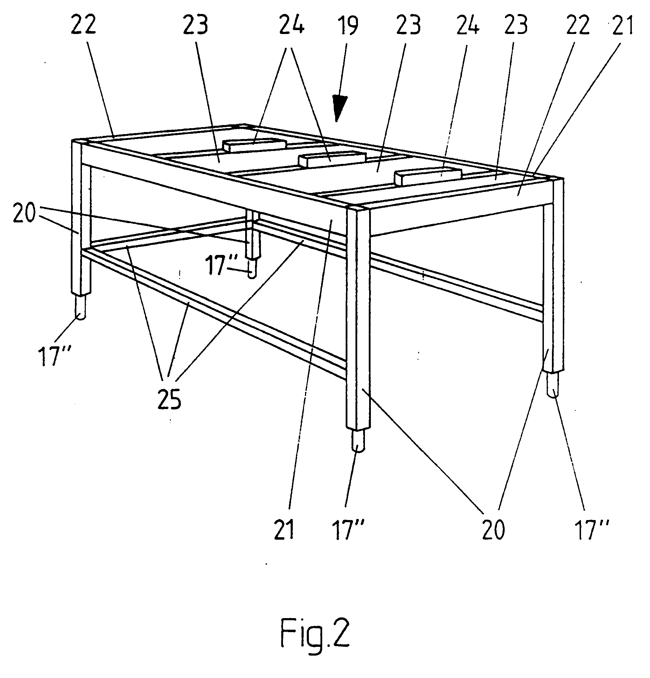

Die Heckflanken 10 und die vorderen Eckpfosten 9 weisen an ihrem oberen Ende Einstecköffnungen 17' auf, in die als entsprechende Gegenstücke geformte Einsteckenden 17'' eines Planengestells 19 (Fig. 2) eingeführt werden können. Diese Öffnungen werden durch Kappen verschlossen, falls kein Plangestell aufgesetzt ist.

Um die Heckflanken 10 fest mit dem hinteren Querholm 13 zu verspannen, sind zwei durch die gesamte Länge des Querholms laufende Zuganker mit Hutmuttern 18 vorgesehen, die als Gewindestangen ausgebildet sind.

Das in Figur 2 dargestellte Planengestell 19 besteht aus vier vertikal angeordneten Eckpfosten 20, die an ihren unteren Enden entsprechende Einsteckenden 17'' für das Einführen in die Einstecköffnungen 17' des Pritschenaufbaus 1 (Fig. 1) aufweisen. Die oberen Enden der Eckpfosten werden durch in Längsrichtung angeordnete Planenkantenprofile 21 und zwei Querprofile 22 tischförmig zusammengehalten. Zwischen den Planenkantenprofilen 21 erstrecken sich Spriegelprofile 23, die in Profile 21 eingesteckt sind und auf denen wiederum kürzere Enden des Spriegelprofils befestigt sind, damit eine übergestülpte Plane eine Dachneigung erhält, die Wasser leicht abfließen läßt.

Zur Verstärkung des Gestells werden die Eckpfosten 20 im unteren Bereich mittels Relingprofilen 25 U-förmig verbunden.

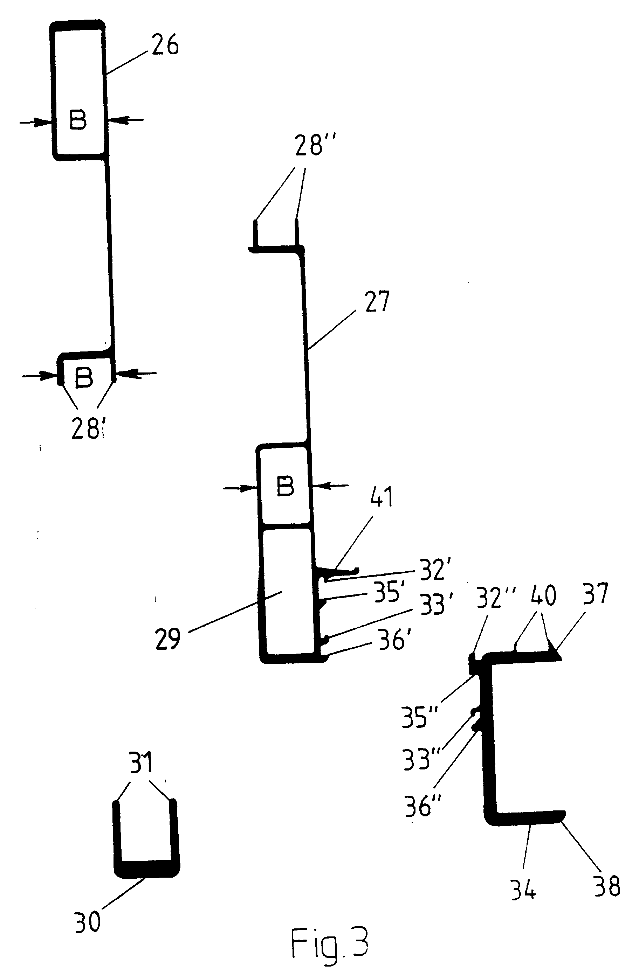

In Figur 3 sind die wesentlichen Profile der Bugwand 6 entsprechend Schnittlinie III-III aus Figur 1 vereinzelt dargestellt. Die Bugwand 6 besteht aus einem oberen Wandprofil 26 und einem Bugprofil, das den vorderen Querholm 27 des Aufbaus bildet. Durch die im unteren Ende des oberen Wandprofils angeordneten, vertikal ausgerichteten Stege 28', die auf die am oberen Ende des vorderen Querholms 27 angeordneten, vertikal ausgerichteten Stege 28'' steckbar sind, können beide Profile 26, 27 miteinander verbunden werden. Im unteren Bereich des vorderen Querholms 27 befindet sich ein hohlprofilartiger Teil 29, in den U-Profil 30 eingesteckt werden kann.

Das U-Profil 30 weist in vertikaler Richtung 2 Schenkel 31 auf, deren Abstand nahezu der Schlüsselweite eines Schraubenkopfes entspricht. Zu den geöffneten Enden hin verringert sich der Abstand geringfugig soweit, daß im Endbereich eine Klemmung des Schraubenkopfes erfolgt. Zur Befestigung des Vorderen Querholmss an der Deichsel eines Fahrgestells, werden an entsprechender Stelle in vertikaler Richtung eine oder mehrere Bohrungen in das Hohlprofil 29 eingebracht. Das gleiche Bohrbild erhält der Profilabschnitt des U-Profils 30. An den Stellen der Bohrungen werden die Schraubenköpfe der Befestigungsschrauben, deren Schäfte in Richtung der Bohrungen weisen, festgeklemmt und zusammen mit dem Abschnitt des U-Profils in das Hohlprofil 29 eingeführt bis sich die Bohrbilder decken. Mittels einer entsprechend geformten Stange wird anschließend die Klemmkraft des U-Profils überwunden und die Schrauben durch die Bohrungen herausgedrückt. Dadurch erhält man sichere Befestigungspunkte, mit denen der Pritschenaufbau an der Deichsel oder an anderen Teilen eines Fahrgestells sicher befestigt werden kann.

Vorzugsweise ist der vordere Querholm 27 mit Formelementen 32', 33' für die formschlüssige Verbindung mit einem Verstärkungsprofil 34 versehen. Das Verstärkungsprofil weist dazu die entsprechenden negativen Formelemente 32'', 33'' auf. Mit Hilfe dieser Formelemente 32, 33 lassen sich die beiden Profile formschlüssig ineinanderfügen. Je nach gewünschter Tragfähigkeit des Anhängers kann die Tragfähigkeit des vorderen Querholms verstärkt werden. Das Verstärkungsprofil 34 weist zum Einleiten von Lasten in den vorderen Querholm horizontale Flächen 35'' und 36'' auf, die sich auf den entsprechenden Gegenflächen 35' und 36' des vorderen Querholmss 27 abstützen.

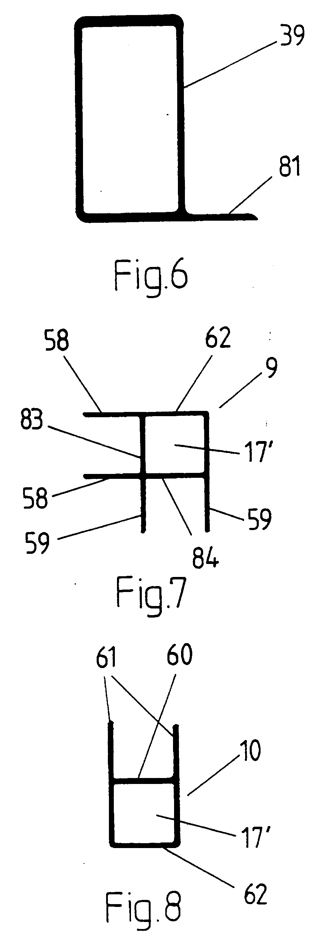

Zwei horizontale Schenkel 37, 38 des Verstärkungsprofil 34 weisen einen Abstand zueinander auf, der der Höhe des in Figur 6 dargestellten Unterzugprofils entspricht. Die Schenkel 37 und 38 dienen somit als Einspannstellen für die Enden der Unterzüge 39, über die die Lasten der Unterzüge abgetragen werden können.

Die Enden der Unterzüge werden mittels vertikaler Schrauben, die beide Schenkel 37 und 38 des Verstärkungsprofils durchsetzen, befestigt. Die am Schenkel 37 in vertikaler Richtung angeordneten Schenkel 40 verhindern dabei ein Verdrehen des Schraubenkopfes, weil der Abstand der Schlüsselweite der verwendeten Befestigungsschraube entspricht.

Die in dieser Figur nicht dargestellte Bodenplatte 5 (Fig. 1) stützt sich an ihren Rändern auf Steg 41 ab und ist vorzugsweise mittels Bohrschrauben am Steg 41 befestigt.

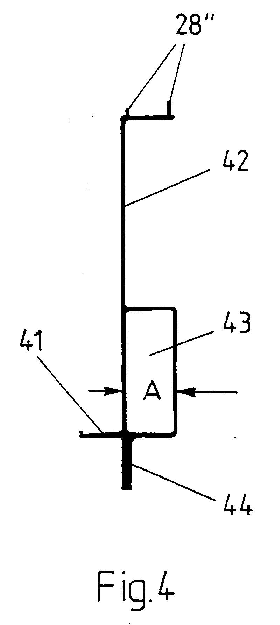

Figur 4 zeigt einen Schnitt durch ein unteres Seitenwandprofil 42, das die Längsholme des Aufbaus bildet. Ein als Hohlprofil 43 ausgeführter Teil trägt wesentlich zur Festigkeit des Seitenwandprofils 42 bei. Am unteren Ende ist ein vertikaler Steg 44 angeformt. In diesen Steg 44 werden horizontale Löcher gebohrt, mit deren Hilfe der Pritschenaufbau im Bereich der Achse an entsprechende vertikal angeordnete Platten des Fahrgestells angeschraubt wird. Diese vertikale Ausrichtung hat den Vorteil, daß die Schrauben leicht zugänglich sind und unterhalb des Profils weniger verschmutzen. Steg 41 dient, wie bereits beschrieben, der Befestigung der Bodenplatte 5.

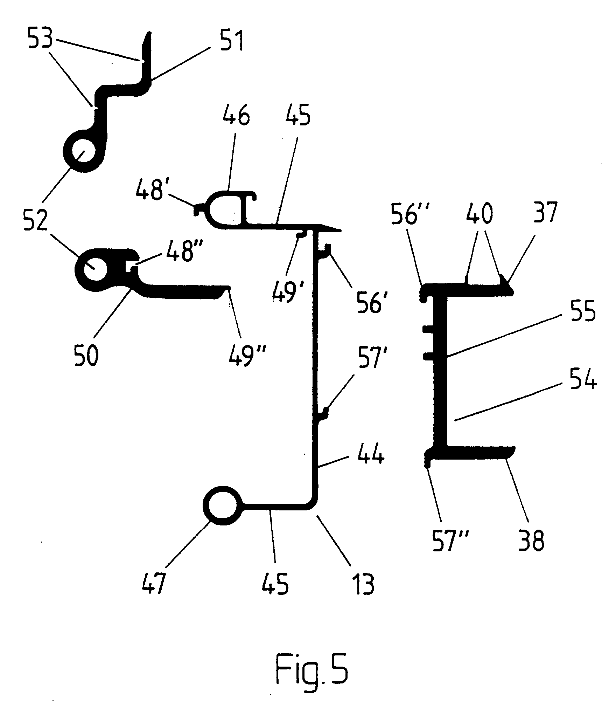

Figur 5 stellt einen Schnitt durch eine Heckwand ohne Heckklappe gemäß Schnittlinie V-V aus Figur 1 dar. Der Querholm 13 besteht aus einem vertikalen Steg 44 und zwei horizontalen Schenkeln 45, die als Hohlprofile 46, 47 enden. Die Hohlprofilteile 46, 47 dienen zur Aufnahme von in Figur 5 nicht dargestellten Zugankern 18 (Fig. 1).

Die oberen Profilteile 45, 46 weisen Formelemente 48', 49' auf, mit deren Hilfe die entsprechenden negativ geformten Elemente 48'' eines Scharnierprofils 50 formschlüssig eingesteckt werden können. Mit Hilfe eines heckklappenseitigen Scharnierteils 51 wird die nicht dargestellte Heckklappe 8 befestigt. Dabei werden zwei kurze Abschnitte der Profile 50, 51 von einer nicht dargestellten Schraube, die durch Bohrung 52 eingesteckt wird, axial und radial aber schwenkbar gehaltert. Um die Befestigung der Heckklappe zu erleichtern, weist das klappenseitige Scharnierprofil 51 Rillen 53 auf, die als Hilfslinie für eine Bohrung dienen.Zur Erhöhung der Tragfähigkeit kann auch der Querholm 13 mittels eines Heckverstärkungsprofils 54für höhere Lasten verarbeitet werden. Das Verstärkungsprofil 54 weist Schenkel 37, 38 sowie Stege 40 entsprechend dem bugseitigen Verstärkungsprofil 34 (Fig. 3) auf. Die Befestigung von Unterzügen erfolgt analog. Die an den vertikalen Stegen 44 und 55 der Profile 13 bzw. 54 vorgesehenen Formelemente 56' und 57' bzw. 56'' und 57'' ermöglichen die formschlüssige Verbindung der beiden Profile 13, 54.

Figur 6 stellt ein als Hohlprofil ausgebildeten Unterzug 39 dar, dessen untere Seite durch einen seitlichen Steg 81 in horizontaler Richtung verlängert ist. Auf diesen Steg lassen sich Chassiskabelklemmen aufstecken und dadurch zeitsparend Kabel für die Heckleuchten montieren.

Figur 7 zeigt ein vorderes Eckpfostenprofil 9, an das an zwei benachbarten Seiten 83, 84 parallel angeordnete Stege 58, 59 angeformt sind. Der Abstand der Stege 58, 59 zueinander ist so gewählt, daß die Bugwand und Seitenwandenden leicht dazwischen eingeführt werden können. Mittels die Stege und Seitenwandprofile durchsetzenden Schrauben wird eine stabile Eckverbindung erreicht.

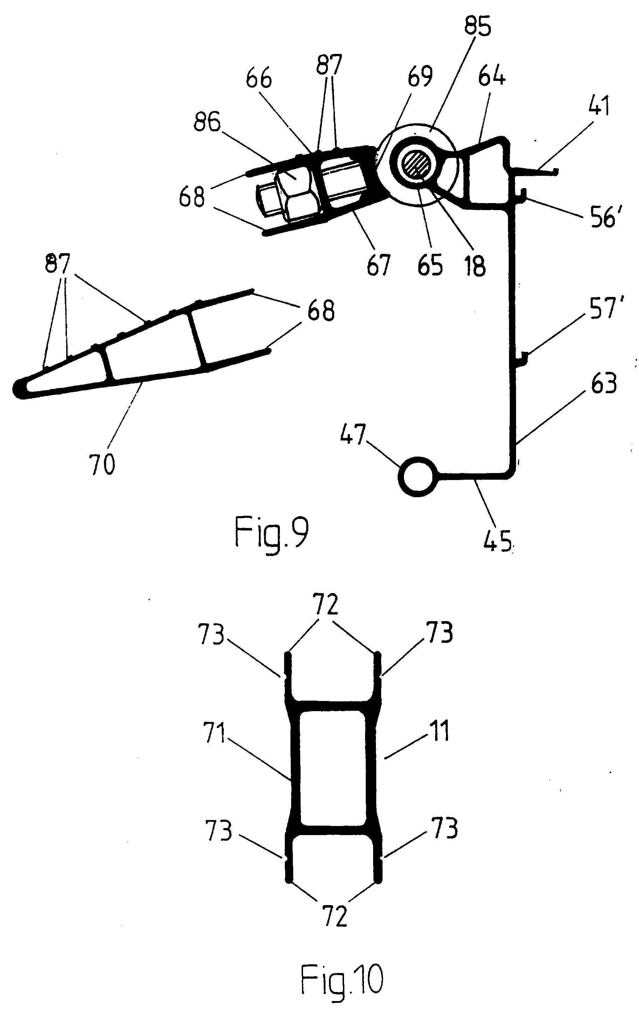

Figur 8 zeigt das entsprechende Profil für die Heckflanke. Das Heckflankenprofil 10 nimmt lediglich ein Ende der Seitenwand 7 (Fig. 1) auf, so daß hier nur an die Seite 60 des Profils parallele Stege 61 angeformt sind. Der hohlprofilartig geformte Teil 62 des Eckpfostens 9 und der Heckflanke 10 dient als Einstecköffnung 17' für die Einsteckenden 17'' (Fig. 2) eines Planengestells 9.In Figur 9 ist ein modifizierter Querholm als Heckprofil 63 dargestellt. Wie in Figur 5 weist das Heckprofil 63 dieselben Formelemente 41 (Fig. 3) zur Auflage der Bodenplatte 5, 56' und 57' zum Einstecken eines Heckverstärkungsprofils 54 (Fig. 5), und einen unteren Schenkel 45 mit Hohlprofilteil 47 auf (Fig. 5). Im oberen Bereich des Heckprofils 63 ist der dem Schenkel 45 gegenüberliegende Teil zu einem Hohlkastenprofil 64 ausgestaltet, dessen äußerer zylindrischer Teil zur Aufnahme eines oberen Zugankers 18 dient. Als Gegenstück zu diesem rohrförmigen Profilteil ist ein Auffahrrampenscharnierprofil ausgebildet, daß sich aus einem Hohlprofilteil 67 und zwei parallelen Schenkeln 68 zusammensetzt. Zur Befestigung des Scharnierprofils 66 am Heckprofil 63 werden durch die Fläche 69 mittig in Richtung der Schenkel 68 Bohrungen eingebracht und Augenschrauben 85 mit Hilfe zuvor in das Hohlprofil 67 eingebrachter Muttern 86 fest mit dem Scharnierprofil 69 verschraubt. Der Abstand der Schenkel 68 ist so gewählt, daß ein Verdrehen einer eingeführten Schraubenmutter 86 verhindert wird. An den den Schrauben 85 entsprechenden Stellen wird der rohrförmige Profilteil 65 des Heckprofils 63 ausgeklingt, so daß die Augen der Schrauben 85 mit ihren Zentren mit der Langsachse des rohrförmigen Profilteils 65 fluchtend angehalten und anschließend durch Einführen des dargestellten Zugankers 18 verriegelt werden können. Durch diese Gestaltung wird verhindert, daß Schmutzteilchen ein Verklemmen der Platte beim Schwenken verursachen können.

Besonders vorteilhaft ist, daß die Profilierung 87 nur einseitig vorgesehen ist und sowohl das Scharnierprofil 66 als auch das Auffahrkeilprofil 70 symmetrischausgebildet ist. Je nach Verwendungszweck kann somit eine glatte oder profilierte Oberfläche gewählt werden.

Zwischen den parallelen Schenkeln 68 des Scharnierteils 66 wird eine Platte entsprechender Dicke eingefügt und mittels Durchgangsschrauben fest mit dem Scharnierteil verbunden.

Auf die gegenüberliegende Kante der Auffahrplatte ist vorzugsweise ein Auffahrkeilprofil 70 aufgesteckt und mit der Auffahrplatte verbunden. Zu diesem Zweck weist das Auffahrkeilprofil die entsprechenden Stege 68 auf.

In Figur 10 ist zu erkennen, daß die Relingstützen 11 im wesentlichen aus einem mittleren Hohlprofilteil 71 bestehen, dessen Seiten vertikal nach oben und unten durch Stege 72 verlängert sind. Zwischen diesen Stegen werden das obere nicht dargestellte Relingsprofil sowie die obere Kante des Wandprofils (Fig. 3) gehalten. In die Stege 72 sind Rillen eingeformt als Hilfe beim Einbringen von Bohrungen. Kürzere Abschnitte dieses Profils dienen dazu, an einzelnen Stellen die Reling 12 mit den Seitenwänden 7 zu verbinden.

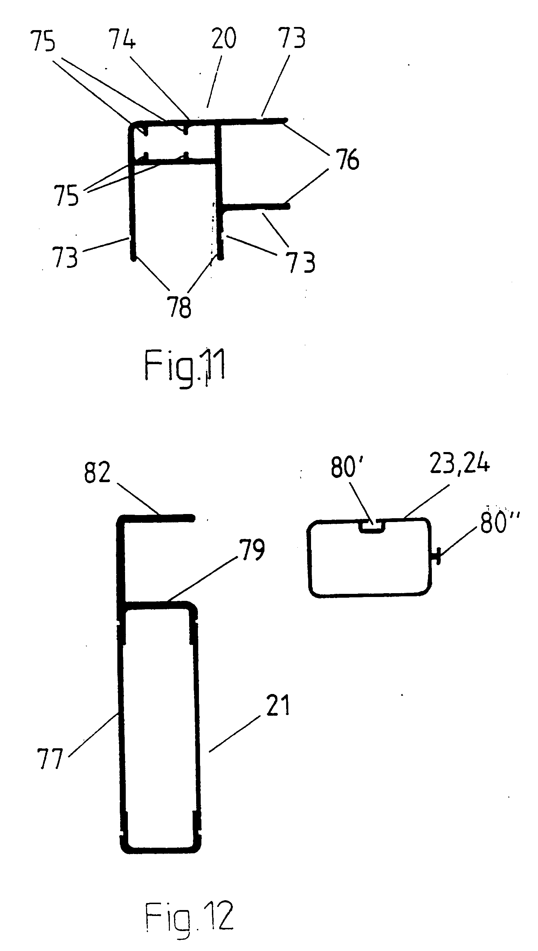

Figur 11 zeigt das Heckpfostenprofil 20 eines Planengestells. Es setzt sich zusammen aus einem Hohlprofilteil 74, in das vier Stege 75 hineinragen.

Die Stege 75 begrenzen die Ecken eine Quadrats, das Einsteckenden 17'' (Fig. 2) umhüllt und als Einspannung für deren feste Enden dient. Die Schenkel 76 und 78 dienen der Befestigung von oben angeordneten Querprofilen 22 bzw. Planoberkantenprofilen 21 (Fig. 2). Zum Anbringen von Bohrungen sind wiederum Rillen 73 eingeformt.Figur 12 stellt ein Planoberkantenprofil 21 dar, dessen Hohlprofilteil 77 durch ein die breitere Seite verlängernden rechtwinkligen Schenkel 82, eine zur Seite hin geöffnete U-förmige Nut 79 aufweist, die zur Aufnahme des Spriegelprofils 23 dient. Wie aus Figur 2 ersichtlich, wird das Spriegelprofil 23 rechtwinklig zum Oberkantenprofil 21 angeordnet und von der Nut 79 mit dem Ende aufgenommen. Das Spriegelprofil weist an benachbarten Seiten ein negatives und entsprechend positiv ausgebildetes Formelement 80' bzw. 80'' auf, so daß zwei Abschnitte des Spriegelprofils 23 um 90° verdreht mittels der Formelemente 80', 80'' formschlüssig miteinander verbunden werden können. Die Lage der beiden um 90° verdrehten und ineinandergeschobenen Profile 23 und 24 ist aus Figur 2 ersichtlich. Durch Klebeverbindungen werden die Teile 23, 24 in ihrer Lage zueinander gehalten.

Der erfindungsgemäße Pritschenaufbau kann bei geringer Fertigungstiefe vorteilhaft innerhalb kurzer Montagezeit fertiggestellt werden. Bei der Montage werden keinerlei Baugruppen vorgefertigt, so daß der Platzverbrauch für die Zwischenlagerung größerer Baugruppen und eine damit sonst verbundene Kapitalbindung vorteilhaft gering ist. Mit Hilfe des erfindungsgemäßen Profilsystems wurde die Fertigungsdurchlaufzeit wesentlich verringert. Das System läßt sich vorteilhaft einfach an unterschiedliche Tragfähigkeiten anpassen.

### BEZUGSZEICHENLISTE

### Fig. 1

- 1: Pritschenaufbau
- 2: Fahrgestell
- 3: Rad
- 4: Kotflügel
- 5: Bodenplatte
- 6: Bugwand
- 7: Seitenwand
- 8: Heckklappe
- 9: Eckpfosten
- 10: Heckflankenprofil
- 11: Relingsstütze
- 12: Reling
- 13: Querholm
- 14: Scharnier
- 15: Heckleuchte
- 16: Dreieck
- 17': Einstecköffnungen
- 17'': Einsteckende
- 18: Zuganker

### Fig. 2

- 19: Planengestell
- 20: Eckpfosten
- 21: Planenkantenprofil
- 22: Querprofil
- 23: Spriegelprofil
- 24: Spriegelprofil
- 25: Relingsprofil

### Fig. 3

- 26: oberes Wandprofil
- 27: vorderer Querholm
- 28': Stege
- 28'': Stege
- 29: Hohlprofilteil
- 30: U-Profil
- 31: Schenkel
- 32: Formelement
- 33: Formelement
- 34: Verstärkungsprofil
- 35: Fläche
- 36: Fläche
- 37: Schenkel
- 38: Schenkel
- 40: Stege

### Fig. 4

- 41: Stege
- 42: unteres Seitenwandprofil
- 43: Hohlprofilteil

### Fig. 5

- 44: Steg
- 45: Schenkel
- 46: Hohlprofilteile
- 47: Hohlprofilteile
- 48: Formelement
- 49: Formelement
- 50: Scharnierprofil
- 51: klappseitiges Scharnierteil
- 52: Bohrungen
- 53: Rille
- 54': Heckverstärkungsprofil
- 55: Steg

### Fig. 6

- 39: Unterzug
- 81: Steg

### Fig. 7

- 56: Formelement
- 57: Formelement
- 58: Stege
- 59: Stege
- 83: Seiten
- 84: Seiten

### Fig. 8

- 60: Seite
- 61: Stege
- 62: Hohlprofilteil

### Fig. 9

- 63: Heckprofilteil
- 64: Hohlkastenprofil
- 65: zylindrisches Profilteil
- 66: Scharnierprofil
- 67: Hohlprofilteil
- 68: Schenkel
- 69: Fläche
- 70: Auffahrkeilprofil
- 85: Augenschraube
- 86: Mutter
- 87: Profilsteg

### Fig. 10

- 71: Hohlprofil
- 72: Stege

### Fig. 11

- 73: Rille (Fig. 5)
- 74: Hohlprofilteil
- 75: Stege
- 76: Schenkel

### Fig. 12

- 77: Hohlprofilteil
- 78: Schenkel (Fig. 12)
- 79: Nut
- 80: Formelemente
- 82: Steg

## Patentansprüche

1. Pritschenaufbau, vorzugsweise als Aufbau für PKW-Anhänger, aus stranggepreßten Profilen, vorzugsweise Aluminiumprofilen, bestehend aus mindestens zwei seitlich angeordneten tragenden Längs- und und vorn und hinten angeordneten Querholmen, die zusammen einen Rahmen bilden, **dadurch gekennzeichnet,** daß er mindestens ein parallel zum Querholm (27,13) angeordnetes und mit diesem mittels formschlüssig ineinandergreifender Profilteile (32',32'',33',33'',56',56'',57',57'') verbundenes Verstärkungsprofil (34,54) aufweist und/oder das Verstärkungsprofil (34) ein als Auflager für Unterzüge (39) ausgebildetes Formelement, vorzugsweise zwei parallel Stege (37,38) aufweist, wobei das Verstärkungsprofil (34,54), vorzugsweise parallele, in vertikaler Richtung angeordnete Schenkel (40) aufweist, deren Abstand der Schlüsselweite eines Schraubenkopfes entspricht.

2. Pritschenaufbau, vorzugsweise als Aufbau für PKW-Anhänger, aus stranggepreßten Profilen, vorzugsweise Aluminiumprofilen, bestehend aus mindestens zwei seitlich angeordneten tragenden Längs- und vorn und hinten angeordneten Querholmen, die zusammen einen Rahmen bilden, **dadurch gekennzeichnet,** daß er ein in das Profil eines Querholms (27) einsteckbares U-förmiges Profil (30) aufweist, dessen lichte Weite der Schlüsselweite eines Schraubenkopfes entspricht und das U-förmige Profil (30) Schenkel (31) aufweist, deren Abstand sich zu den freien Enden hin vorzugsweise verringert.

3. Pritschenaufbau, vorzugsweise als Aufbau für PKW-Anhänger, aus stranggepreßten Profilen, vorzugsweise Aluminiumprofilen, bestehend aus mindestens zwei seitlich angeordneten tragenden Längsvorn und hinten angeordneten Querholmen, die zusammen einen Rahmen bilden, wobei die Enden der Längsholme (7,42) und mindestens eines Querholmes (13) mittels mindestens eines, sich über die gesamte Breite des Rahmen erstreckenden, Zugankers (18) verspannt wird, **dadurch gekennzeichnet,** daß das Profil des hinteren Querholms (13) mindestens ein geschlossenes Hohlprofilteil (46,47) für den Zuganker (18) aufweist und das Profil des hinteren Querholms (13) Formelemente (48',49') zum formschlüssigen Einstecken eines Scharnierprofils (50) aufweist.

4. Pritschenaufbau, vorzugsweise als Aufbau für PKW-Anhänger, aus stranggepreßten Profilen, vorzugsweise Aluminiumprofilen, bestehend aus mindestens zwei seitlich angeordneten tragenden Längsvorn und hinten angeordneten Querholmen, die zusammen einen Rahmen bilden, wobei die Enden der Längsholme (7,42) und mindestens eines Querholmes (13) mittels mindestens eines, sich über die gesamte Breite des Rahmen erstreckenden, Zugankers (18) verspannt wird, **dadurch gekennzeichnet,** daß der Pritschenaufbau ein Scharnierprofil aufweist, wobei im Scharnierprofil (66) verschraubte Augenschrauben (85) in entsprechend angeordnete Ausklinkungen eines rohrförmigen Heckprofilteils (65) eingreifend angeordnet sind und mittels eines durch den rohrförmigen Heckprofilteil geführten Zugankers (18) schwenkbar fixiert sind.

5. Pritschenaufbau, nach Anspruch 1 oder 2, **dadurch gekennzeichnet,** daß die Enden der Längsholme (7,42) und mindestens eines Querholmes (13) mittels mindestens eines, sich über die gesamte Breite des Rahmen erstreckenden, Zugankers (18) verspannt werden.

6. Pritschenaufbau nach Anspruch 3, 4 oder 5, **dadurch gekennzeichnet,** daß der Zuganker aus einem Werkstoff besteht, dessen Elastizitätsmodul höher als der des Aluminiums ist.

7. Pritschenaufbau nach Anspruch 1, 2, 3, 4, 5 oder 6, **dadurch gekennzeichnet,** daß ein Verstärkungsprofil vorgesehen ist, wobei das Profil des Querholms (27) und das Verstärkungsprofil (34) angeformte horizontale, sich gegeneinander in vertikaler Richtung abstützende Profilflächen (35',35'',36' 36'') aufweisen und/oder die Profile Rillen (53,73) als eingeformte Anrißlinien aufweisen.

8. Pritschenaufbau nach einem der Ansprüche 1 bis 7, **dadurch gekennzeichnet,** daß er eine Auffahrplatte mit einem Auffahrkeilprofil (70) und einem Scharnierprofil (66) aufweist, wobei das Scharnierprofil (66) vorzugsweise parallel Flächen (68) aufweist, deren Abstand der Schlüsselweite einer Augenschraubenmutter entspricht.

9. Pritschenaufbau nach einem der Ansprüche 1 bis 8, **dadurch gekennzeichnet,** daß er ein Planengestell (19) aufweist mit Eckpfosten (20) und diese oben verbindenden Planenkantenprofilen (21), wobei diese an ihrer Oberseite U-förmige horizontal angeordnete Schenkel (82) zur Aufnahme der Enden eines Spriegelprofils (23) aufweisen, wobei das Spriegelprofil (23) vorzugsweise als rechteckiges Hohlprofil ausgebildet ist, und wobei das Hohlprofil vorzugsweise an zwei benachbarten Seiten angeordnete Formelemente (80*'*,80*''*) aufweist, die sich ergänzend, eine formschlüssige Verbindung miteinander ermöglichen.

## Claims

1. A platform body, preferably as a body for automobile trailers, made of extruded profiles, preferably aluminium profiles, comprising at least two laterally arranged supporting longitudinal beams and front and rear cross beams, which together form a frame, characterised in that the body comprises at least one reinforcing profile (34, 54), which is arranged parallel to the cross beam (27, 13) and is connected thereto by means of profile parts (32', 32'', 33', 33'', 56', 56'', 57', 57'') engaging in one another in a positive-locking manner, and/or the reinforcing profile (34) comprises a shaped element, preferably two parallel webs (37, 38), constructed as a support for trusses (39), the reinforcing profile (34, 54) preferably comprising parallel limbs (40) arranged in the vertical direction, whose spacing corresponds to the width of a screw head.

2. A platform body, preferably as a body for automobile trailers, made of extruded profiles, preferably aluminium profiles, comprising at least two laterally arranged supporting longitudinal beams and front and rear cross beams, which together form a frame, characterised in that the body comprises a U-shaped profile (30), which is insertable into the profile of a cross beam (27) and whose free width corresponds to the width of a screw head, and the U-shaped profile (30) comprises limbs (31), whose spacing decreases in the direction of the free ends.

3. A platform body, preferably as a body for automobile trailers, made of extruded profiles, preferably aluminium profiles, comprising at least two laterally arranged supporting longitudinal beams and front and rear cross beams, which together form a frame, the ends of the longitudinal beams (7, 42) and at least one cross beam (13) being clamped by means of at least one tie rod (18) extending over the entire width of the frame, characterised in that the profile of the rear cross beam (13) comprises at least one closed hollow profile part (46, 47) for the tie rod (18) and the profile of the rear cross beam (13) comprises shaped elements (48', 49') for the positive-locking insertion of a hinge profile (50).

4. A platform body, preferably as a body for automobile trailers, made of extruded profiles, preferably aluminium profiles, comprising at least two laterally arranged supporting longitudinal beams and front and rear cross beams, which together form a frame, the ends of the longitudinal beams (7, 42) and at least one cross beam (13) being clamped by means of at least one tie rod (18) extending over the entire width of the frame, characterised in that the platform body comprises a hinge profile, eyebolts (85) screwed into the hinge profile (66) being arranged to engage in correspondingly arranged notches in a tubular rear profile part (65) and being fixed so as to pivot by means of the tie rod (18) guided through the tubular rear profile part.

5. A platform body according to claim 1 or 2, characterised in that the ends of the longitudinal beams (7, 42) and at least one cross beam (13) are clamped by means of at least one tie rod (18) extending over the entire width of the frame.

6. A platform body according to claim 3, 4 or 5, characterised in that the tie rod is made of a material having a modulus of elasticity which is higher than that of the aluminium.

7. A platform body according to claim 1, 2, 3, 4, 5 or 6, characterised in that a reinforcing profile is provided, the profile of the cross beam (27) and the reinforcing profile (34) comprising formed-on, horizontal, profile surfaces (35', 35'', 36', 36''), which are supported against one another in the vertical direction, and/or the profiles comprise grooves (53, 73) as pre-formed flaw lines.

8. A platform body according to one of claims 1 to 7, characterised in that the body comprises a ramp plate with a ramp wedge profile (70) and a hinge profile (66), the hinge profile (66) preferably comprising parallel surfaces (68), whose spacing corresponds to the width of an eyebolt nut.

9. A platform body according to one of claims 1 to 8, characterised in that the body comprises a tarpaulin frame (19) with corner posts (20) and tarpaulin edge profiles (21) connecting the corner posts at the top, the tarpaulin edge profiles (21) comprising on their upper side U-shaped, horizontally arranged limbs (82) for receiving the ends of a tarpaulin frame profile (23), the tarpaulin frame profile (23) preferably being constructed as a rectangular hollow profile, and the hollow profile preferably comprises shaped elements (80', 80'') on two adjacent sides, which shaped elements together allow for a positive-locking connection with one another.

## Revendications

1. Carrosserie à plate-forme, de préférence comme carrosserie pour une remorque de voiture particulière, réalisée avec des profilés extrudés, de préférence des profilés en aluminium, consistant en au moins deux longerons longitudinaux porteurs disposés latéralement et deux longerons transversaux disposés en avant et en arrière, qui forment ensemble un cadre,
caractérisée en ce qu'
elle comporte au moins un profilé de renforcement (34, 54) disposé parallèlement au longeron transversal (27, 13) et relié à celui-ci au moyen de pièces profilées (32', 32'', 33', 33'' 56', 56'', 57', 57'') venant en prise les unes dans les autres par engagement de forme et/ou le profilé de renforcement (34) présente un élément profilé constitué comme une pièce d'appui pour des traverses (39), de préférence deux ailes parallèles (37, 38), le profilé de renforcement (34, 54) présentant des ailes (40) disposées dans le sens vertical, de préférence parallèles, dont l'écartement correspond a l'ouverture de clé d'une tête de vis.

2. Carrosserie à plate-forme, de préférence comme carrosserie pour une remorque de voiture particulière, en profilés extrudés, de préférence en profilés d'aluminium, se composant d'au moins deux longerons porteurs disposés sur le côté et deux longerons transversaux disposés en avant et en arrière, qui forment ensemble un cadre,
caractérisée en ce qu'
elle comporte un profilé (30) en forme d'U qu'on peut inséré dans le profilé d'un longeron transversal (27), dont la largeur libre correspond à l'ouverture d'une tête de boulon et le profilé (30) en forme d'U comprend des branches (31) dont la distance se réduit de préférence en direction des extrémités libres.

3. Carrosserie à plate-forme, de preférence comme carrosserie pour une remorque de voiture particulière, réalisée avec des profilés extrudés, de préférence des profilés en aluminium, consistant en au moins deux longerons longitudinaux porteurs disposés latéralement et deux longerons transversaux disposés en avant et en arrière, qui forment ensemble un cadre, les extrémités des longerons longitudinaux (7, 42) et au moins d'un longeron transversal (13) étant haubanées au moyen d'au moins un tirant d'ancrage (18) s'étendant sur toute la largeur du cadre,
caractérisée en ce que
le profilé du longeron transversal arrière (13) comporte au moins une partie de profilé creux (46, 47) fermée pour le tirant d'ancrage (18) et le profilé du longeron transversal arrière (13) comporte des éléments profilés (48', 49') pour l'insertion en liaison de forme d'un profilé à charnière (50).

4. Carrosserie à plate-forme, de préférence comme carrosserie pour une remorque de voiture particulière, réalisée avec des profilés extrudés, de préférence des profilés en aluminium, consistant en au moins deux longerons longitudinaux porteurs disposés latéralement et deux longerons transversaux disposés en avant et en arrière, qui forment ensemble un cadre, les extrémités des longerons longitudinaux (7, 42) et au moins d'un longeron transversal (13) étant haubanées au moyen d'au moins un tirant d'ancrage (18) s'étendant sur toute la largeur du cadre,
caractérisée en ce que
la carrosserie à plate-forme comporte un profilé a charnière (66), des boulons à oeillet (85) vissés dans le profilé à charnière (66) étant placés en prise dans des encoches placées en correspondance et étant fixés en pouvant pivoter au moyen d'un tirant d'ancrage (18) passant à travers la partie de profilé arrière en forme de tube.

5. Carrosserie à plate-forme selon la revendication 1 ou 2,
caractérisée en ce que
les extrémités des longerons longitudinaux (7, 42) et au moins un longeron transversal (13) sont haubanés au moyen d'un tirant d'ancrage (18) s'étendant sur toute la largeur du cadre.

6. Carrosserie à plate-forme, selon la revendication 3, 4 et 5,
caractérisée en ce que
le tirant d'ancrage se compose d'une matière dont le module d'élasticité est plus élevé que celui de l'aluminium.

7. Carrosserie à plate-forme selon la revendication 1, 2, 3 ou 4,
caractérisée en ce qu'
on prévoit un profilé de renforcement, le profilé du longeron transversal (27) et le profilé de renforcement (34) présentant des faces (35', 35'', 36', 36'') profilées horizontales s'appuyant les unes contre les autres dans le sens vertical, et/ou les profilés présentant des rainures (53, 73) sons forme de lignes de rainurage moulées.

8. Carrosserie à plate-forme selon l'une des revendications 1 à 7,
caractérisée en ce qu'
elle présente un hayon de chargement avec un profilé de chargement en forme de coin (70) et un profilé à charnière (66), ce profilé à charnière (66) présentant de préférence des faces parallèles (68) dont l'écartement correspond à l'ouverture de clé d'un boulon à coulisse avec écrou.

9. Carrosserie à plate-forme selon l'une des revendications 1 à 8,
caractérisée en ce qu'
elle présente un bâti de support de bâche (19) avec des poteaux d'angle (20) et des profilés (21) de support des borda de la bâche se reliant en haut, ceux-ci présentant sur leur face supérieure des branches (82) en forme d'U, disposées horizontalement pour recevoir les extrémités d'un profilé servant d'arceau (23), le profilé servant d'arceau (23) étant réalisé de préférence sous la forme d'un profilé creux de section rectangulaire et le profilé creux présentant de préférence sur les deux côtés voisins des éléments de forme (80', 80'') qui, en se complétant, permettent d'obtenir une liaison à engagement de forme de l'un avec l'autre.
